# EUROPEAN PATENT APPLICATION

(11) **EP 1 167 827 A1**
(43) Date of publication of application: **02.01.2002**
(21) Application number: 00202293.7
(22) Date of filing: 30.06.2000
(51) Int. Cl.: F16H 55/56

(54) **Adjustable pulley for use in a continuously variable transmission and constant frequency generator wherein such is utilised**

(71) Applicant: Van Doorne's Transmissie B.V., 5000 AM Tilburg (NL)
(72) Inventor: Van Spijk, Johannes Gerardus Ludovicus Maria, 5151 VT Drunen (NL); Pelders, Hendrikus Adrianus Arnoldus Wilhelmina, 5391 BT Nuland (NL)

(57) **Abstract**

Adjustable pulley (5), in particular for a continuously variable transmission, comprising two pulley discs (10, 11) on a pulley shaft (7), whereby each disc (10, 11) is provided with a contact plane (27) that extends from the pulley shaft (7) in a predominantly radially outward direction and that faces the contact plane (27) of the other disc (11, 10), at least one pulley disc (11) is provided with a sleeve (16) that is fitted axially movably around the pulley shaft (7) and that extends from the contact plane (27) in a direction generally away from the other disc (1). The sleeve (16) is further provided with a nose part (24) extending from the contact plane (27) in a direction generally towards the other disc (10).

## Description

The present invention relates to an adjustable pulley according to the preamble of claim 1. This pulley is known from EP-A-0.777.069 and is in particular intended for clamping a metal push-type drive belt in a continuously variable transmission. The known pulley comprises two pulley discs on a pulley shaft, whereby each disc has a contact plane intended for contact with the drive belt, which contact plane extends from the pulley shaft in a predominantly radially outward direction and faces the contact plane of the other disc. Together the contact planes of a pulley define a groove for accommodating the drive belt, which groove fans out in the radially outward direction. At least one disc is axially movable towards the other under the influence of a hydraulic pressure to be exerted in a cylinder of a piston-cylinder assembly, whereby a piston of the assembly is fixed to the movable disc and the cylinder is fixed to the pulley shaft. The movable disc is provided with a sleeve fitted concentrically around the pulley shaft, extending from the contact plane in a direction away from the other disc. The sleeve avoids tilting of the movable disc with respect to the pulley shaft and may accommodate a means for fixing the axially movable disc to the pulley shaft in a direction of rotation, such a ball-groove connection or a tooth-groove connection.

During use of the pulley in the continuously variable transmission the drive belt is located between the pulley discs, whereby the discs exert a clamping force on the drive belt under the influence of the hydraulic pressure exerted in the piston-cylinder assembly. As a result torque transmission between the pulley and the drive belt is enabled through friction. It is noted, that the reaction force of the clamping force exerts bending moment on the discs, which is largely dependent of a radial position on the discs of an interaction between the belt and the discs. To limit a deformation of the discs as a result of the bending moment, they are constructed relatively rigidly, i.e. having a large axial width, which generally decreases in radial direction to conserve weight.

The known pulley has the disadvantage that either the deformation of the movable discs is relatively large or that the movable disc has a considerable axial width and consequently also a considerable weight. Either way, the functioning and in particular the efficiency of the continuously variable transmission wherein the pulley is to be adopted will not be optimal.

It is an aim of the invention to improve the design of the known pulley so as to effect an improvement in the functioning of the transmission provided with such pulley. According to the invention the pulley may be favourably characterised according to claim 1. The measure according to the invention has the effect that the deformation of the movable pulley disc may be reduced considerably, because a load on the disc is supported on the pulley shaft on both axial sides thereof. Hereby, it is beneficial that the nose part of the sleeve has a radial dimension which is similar to that of another part of the sleeve, such as an axial end part of the sleeve opposite the nose part. Preferably the radial dimension of the sleeve on either side of the contact plane is equal.
Analysis showed that both stresses in the movable disc and contact pressures between the disc and the pulley shaft may be reduced advantageously, whereby a service-life of the pulley is improved. Moreover, less deformation of the movable discs during use in the continuously variable transmission is usually considered beneficial to the interaction between drive belt and pulley discs. Alternatively, the movable disc may be constructed less rigidly by reducing its axial width, which has the advantage that the mass centre is shifted radially inward decreasing pulley inertia or even that the overall weight of the movable disc is reduced. In case the other disc is fixed to the pulley shaft, the axial dimension of the movable disc may even be less than that of the other disc, at least at a radial position corresponding to a radius of a radially outer surface of the sleeve, while still having similar deformation characteristics.

It is remarked that a pulley comprising a movable pulley disc provided with a flange part extending from the contact plane towards the other disc in a predominantly axial direction is known per se, it is for example schematically shown in GB-A-2.058.257. However, the flange part of the known pulley part has a small radial dimension compared to that of the sleeve and, consequently, does not strengthen the movable disc to the same extend as the nose part according to the invention, but serves to accurately guide the movable disc along the pulley shaft only.

In a preferred embodiment of the invention, an axial length of the nose part is provided such that the motion of the movable disc towards the other disc is physically limited by the nose part abutting on the other disc. The advantage of this design is that a step in the radially outer surface of the shaft and a step in the radially inner surface of the sleeve that normally serves to limit the said motion is not required. However, when such steps are required for other reasons, e.g. for the accommodation of a ball-groove connection between the movable disc and the pulley shaft, there still remains the advantage that the surfaces of these steps need not undergo the final machining, such as polishing or grinding, that is generally required for abutment surfaces in the pulley. Although now an axial end surface of the nose part that serves to abut on the other disc needs to undergo final machining, this surface is more easily reached and can therefore be machined relatively cheaply.

According to the invention it is further to be preferred that the axial end surface of the nose part and a part of the other disc where the said axial end surface abuts are oriented essentially perpendicular to the pulley shaft. The reference point used in machining the pulley may then be located on the said perpendicular surface parts that are advantageously oriented at right angles with respect to other surfaces of the pulley to be machined, such as the said step surface and the radially inner surface of the sleeve. In the known pulley the reference point is generally located on the contact plane, whereby the surfaces to be machined are disadvantageously oriented at sharp angles to said contact plane.

It is remarked that the axial end surface for abutting the other disc may be advantageously adopted independently from the sleeve with the nose part according to the invention. For example the axial end surface according to the invention may also be incorporated in the flange part of the pulley construction known from GB-A-2.058.257, because the strength requirements are relatively low for such application of the flange part, since the accompanying forces are oriented in line with the flange part, as opposed to forces accompanying the aforementioned bending moment.

The pulley according to the invention is particularly suited for application in a constant frequency generator such as used in aviation, wherein an electrical generator is driven at a constant speed through the continuously variable transmission. Such application is, in contrast to automotive applications, usually characterised by the requirement of a relatively long service life, however, while providing a relatively small range of transmission ratios only. To satisfy this requirement, a smallest radial position of the drive belt between the discs of the pulley will be set relatively large, so as to effect relatively low bending stresses in the belt and improve its service life. This means that there is ample room in radial direction to accommodate the nose part of the sleeve according to the invention, without effecting the range of transmission ratios.

The invention will now be elucidated further with reference to the figures, wherein:
Figure 1 is a cross section of the known pulley as applied in the continuously variable transmission CVT;
Figure 2 is an embodiment of the pulley according to the invention wherein an axial separation of the pulley discs is the largest;
Figure 3 is an embodiment of the pulley according to the invention wherein an axial separation of the pulley discs is the smallest;

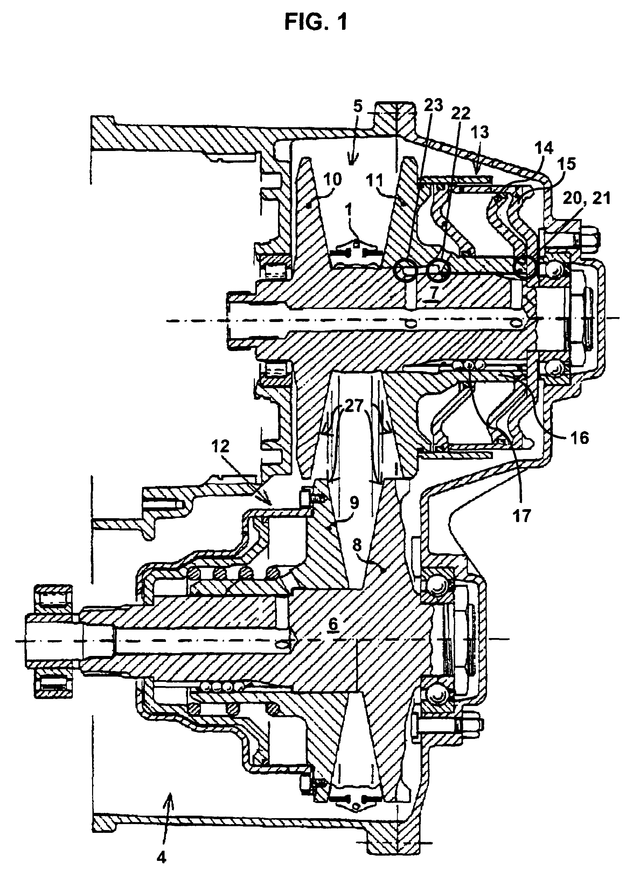

In figure 1 the known pulley as adopted in a continuously variable transmission is shown in tangential cross section. The transmission is provided with an input pulley 5, an output pulley 4 and a drive belt provided there between to transmit torque from the input pulley 5 to the output pulley 4 at a torque ratio that is continuously variable between a minimum torque ratio and a maximum torque ratio by varying a radial position of interaction between the belt 1 and the pulleys 5; 4. To this end, each pulley 5; 4 comprises a fixed disc 10; 8 on a pulley shaft 7; 6 and an axially movable disc 11; 9 provided on the pulley shaft 7; 6. Whereby each disc 10, 11; 8, 9 has a contact plane 27 intended for contact with the drive belt 1, which contact plane 27 extends from the pulley shaft 6; 7 in a predominantly radially outward direction and faces the contact plane 27 of the other disc 11, 10; 9, 8 of that pulley 5; 4. Together the contact planes 27 of a pulley 5; 4 define a groove for accommodating the drive belt 1, which groove fans out in the radially outward direction. By urging the axially movable disc 11; 9 of a pulley 5; 4 towards the fixed disc 10, 8 by means of a piston-cylinder assembly 13; 12, an axial separation between the discs 10, 11; 8, 9 of a pulley 5, 4 may be influenced, as well as the said position of interaction. The piston-cylinder assembly 13 comprises a piston 14 fixed to the movable disc 11 and a cylinder 15 fixed to the pulley shaft 7.

The movable disc 11 is provided with a sleeve 16 fitted concentrically around the pulley shaft 7, extending from the contact plane 27 in a direction away from the other disc 10. The sleeve 16 avoids tilting of the movable disc 11 with respect to the pulley shaft 7 and may accommodate a means 17 for fixing the axially movable disc 11 to the pulley shaft 7 in a direction of rotation, such a ball-groove connection 17 or a tooth-groove connection. The pulley 5 comprises means 20, 21, 22, 23 for physically limiting an axial motion of the movable disc 11 to prevent that the drive belt 1 may contact the pulley shaft 7 or that it is squeezed from the groove defined by the contact planes 27. The means comprise two abutment surfaces 20, 21 for limiting the motion of the movable disc 11 away from the other disc 10 and two abutment surfaces 22, 23 for limiting the motion of the movable disc 11 towards from the other disc 10, whereby the latter abutment surfaces are formed as a step 22 in a radially inner surface of the sleeve 16, respectively as a step 23 in a radially outer surface of the shaft 7.

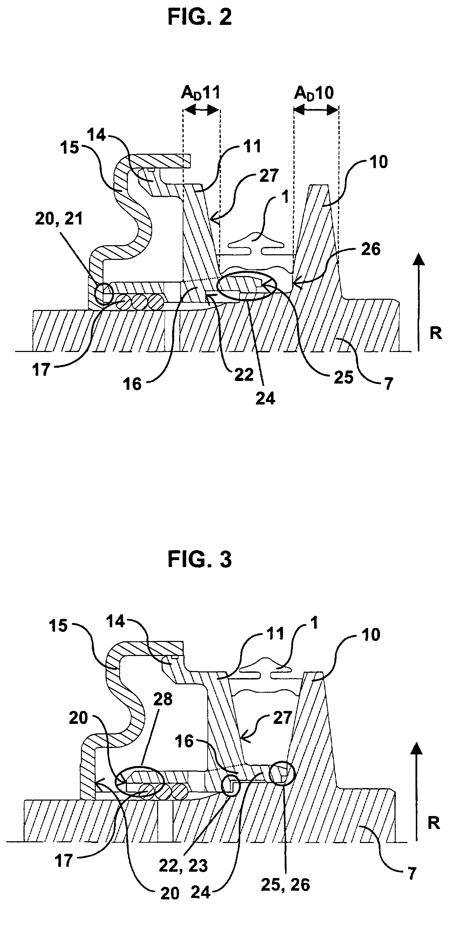

Figures 2 and 3 is a partial cross section of a preferred embodiment of the pulley 5 according to the present invention, whereby in figure 2 the axial separation between the pulley discs 10, 11 is largest and in figure 3 the axial separation between the pulley discs 10, 11 is smallest. The arrows marked R indicate the radial direction. The axially movable disc 11 of the adjustable pulley 5 according to the invention is provided with a sleeve 16 comprises a nose part 24 extending from the contact plane 27 in a direction generally towards the other disc 10. The measure according to the invention has the effect that the deformation of the movable pulley disc 11 may be reduced considerably, because a load on the disc 11 is supported on the pulley shaft 7 on both axial sides thereof. The nose part 24 of the sleeve 16 has a radial dimension which is similar to that of another part of the sleeve 16, such as an axial end part 28 of the sleeve 16 opposite the nose part 24. Preferably the radial dimension of the sleeve 16 on either side of the contact plane 27 is virtually equal. In case the other disc 10 is fixed to the pulley shaft 7, the axial dimension A_{D}11 of the movable disc 11 may even be less than that A_{D}10 of the other disc 10, at least at a radial position corresponding to a radius of a radially outer surface of the sleeve 16, while still having similar deformation characteristics.

In a preferred embodiment of the invention, an axial length of the nose part 24 is provided such that the motion of the movable disc 11 towards the other disc 10 is physically limited by the nose part 24 abutting on the other disc 10. The advantage of this design being that a step 23 in the radially outer surface of the shaft 7 and a step in the radially inner surface 22 of the sleeve 16 that normally serves to limit the said motion is not required. However, when such steps 22, 23 are required for other reasons, e.g. for the accommodation of the ball-groove connection 17 between the movable disc 11 and the pulley shaft 7, there still remains the advantage that the surfaces of these steps 22, 23 need not undergo the final machining, such as polishing or grinding, that is generally required for abutment surfaces in the pulley 5. Although now an axial end surface 25 of the nose part 24 that serves to abut on the other disc 10 needs to undergo final machining, this surface 25 is more easily reached and can therefore be machined relatively cheaply.

According to the invention it is further to be preferred that the axial end surface 25 of the nose part 24 and a part 26 of the other disc 10 where the said axial end surface 25 abuts are oriented essentially perpendicular to the pulley shaft 7. The reference point used in machining the discs 10, 11 may then be located on the said perpendicular surface parts 25, 26 that are advantageously oriented at right angles with respect to other surfaces of the pulley 5 that need to be machined, such as the said step surface 22, 23 and the radially inner surface of the sleeve. In the known pulley 4; 5 the reference point is located on the contact plane 27 of the respective disc 8, 9; 10, 11, whereby the surfaces to be machined are disadvantageously oriented at sharp angles to said contact plane 27.

According to the invention it is advantageous that the axial end surface 25 of the nose part 24 shows a step in axial direction. Hereby, a so-called under cut is created between the said part 26 of the other disc 10 and the pulley shaft 7 which need not be final machined, because it does not contact the nose part 24 and accordingly does not serve as an abutment surface. The advantage of such construction being that final machining of the said part 26 is easily allowed.

## Claims

1. Adjustable pulley (5), in particular for a continuously variable transmission, comprising two pulley discs (10, 11) on a pulley shaft (7), whereby each disc (10, 11) is provided with a contact plane (27) that extends from the pulley shaft (7) in a predominantly radially outward direction and that faces the contact plane (27) of the other disc (11; 10), at least one pulley disc (11) is provided with a sleeve (16) that is fitted axially movably around the pulley shaft (7) and that extends from the contact plane (27) in a direction generally away from the other disc (10), **characterised in that** the sleeve (16) comprises a nose part (24) extending from the contact plane (27) in a direction generally towards the other disc (10).

2. Adjustable pulley (5) according to claim 1, **characterised in that** an radial dimension of the nose part (24) of the sleeve (16) is similar to that of another part of the sleeve (16), such as an axial end part (28) of the sleeve (16) opposite the nose part (24).

3. Adjustable pulley (5) according to claim 1 or 2, **characterised in that** an axial dimension (A_{D}11) of the axially movable disc (11) is less than the axial dimension (A_{D}10) of the other disc (10), at least at a radial position (R) corresponding a radius of a radially outer surface of the sleeve (16).

4. Adjustable pulley (5) according to claim 1, 2 or 3, **characterised in that** an length of the nose part (24) in axial direction is such that a motion of the movable disc (11) towards the other disc (10) is physically limited by the nose part (24) abutting on the other disc (10).

5. Adjustable pulley (5) according to claim 4, **characterised in that** an axial end surface (25) of the nose part and a part (26) of the other disc (10) where the said axial end surface (25) abuts are oriented essentially perpendicular to the pulley shaft (7).

6. Adjustable pulley (5) according to claim 4 or 5, **characterised in that** the axial end surface (25) of the nose part (24) shows a step in axial direction.

7. Constant frequency generator, in particular for use in aviation, provided with an electrical generator and a continuously variable transmission comprising an adjustable pulley (5) according to any one of the preceding claims.
